Europäisches Patentamt

European Patent Office

Office européen des brevets

(19)

(11) Veröffentlichungsnummer: **0 069 241**
**B1**

(12) EUROPÄISCHE PATENTSCHRIFT

(45) Veröffentlichungstag der Patentschrift:
11.09.85

(51) Int. Cl.⁴: **B 01 D 53/18**

(21) Anmeldenummer: 82105106.7

(22) Anmeldetag: 11.06.82

(54) Packung für Stoffaustauschkolonnen und Verfahren zur Herstellung der Packung.

(30) Priorität: 08.07.81 CH 4480/81

(43) Veröffentlichungstag der Anmeldung:
12.01.83 Patentblatt 83/2

(45) Bekanntmachung des Hinweises auf die Patenterteilung:
11.09.85 Patentblatt 85/37

(84) Benannte Vertragsstaaten:
BE CH DE FR GB IT LI NL

(56) Entgegenhaltungen:
DE - A - 2 005 295
DE - C - 551 071
US - A - 2 003 271

(73) Patentinhaber: Kühni AG, Mühlebachweg 9-15,
CH-4123 Allschwil (CH)

(72) Erfinder: Bühlmann, Ulrich, Dipl.-Masch.-Ing.,
Feldstrasse 86, CH-4123 Allschwil (CH)

(74) Vertreter: Keller, René, Dr. et al, Patentanwälte Hartmut
Keller, Dr. René Keller Postfach 12, CH-3000 Bern 7 (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Packung für Stoffaustauschkolonnen gemäß dem Oberbegriff des Patentanspruchs 1 und ein Verfahren zur Herstellung der Packung gemäß dem Oberbegriff des Patentanspruchs 14.

Packungen dieser Art, welche systematisch aufgebaut sind, werden für die Rektifikation und Absorption verwendet und dienen dem Stoffaustausch zwischen einer flüssigen und einer gasförmigen (bzw. dampfförmigen) Phase, wobei gleichzeitig mit dem Stoffaustausch auch ein Wärmeaustausch stattfindet. Zweck der Packung ist es vor allem, die Flüssigkeit so zu verteilen, daß eine möglichst große Flüssigkeitsoberfläche für den Stoff- und Wärmeaustausch zur Verfügung steht.

Eine Packung der eingangs genannten Art ist aus der DE-OS 2 005 295 bekannt. Die bekannte Packung besteht aus mehreren einander kreuzend oder in unregelmäßiger Lage angeordneten Lamellengitterpaaren. Jedes der beiden Lamellengitter eines Paares besteht aus annähernd zickzackförmig gebogenen Lamellenstreifen, die an ihren Biegestellen einstückig zusammenhängen und dort flächige Kreuzungsstellen des Gitters bilden.

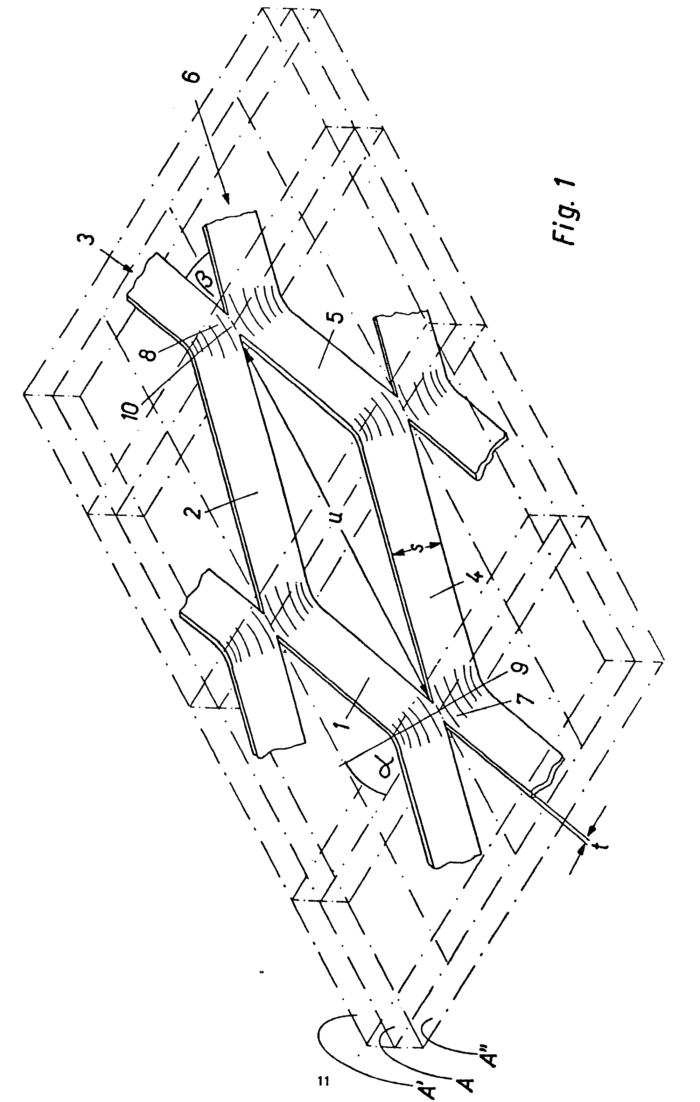

Die räumliche Gestalt eines solchen bekannten Lamellengitters ist aus Fig. 1 ersichtlich, die ein vergrößertes, isometrisches Bild einer Gittermasche zeigt. Die dargestellte Gittermasche ist durch zwei zickzackförmig aufeinanderfolgende Lamellen 1, 2 eines Lamellenstreifens 3 und zwei zickzackförmig aufeinanderfolgende Lamellen 4, 5 des benachbarten Lamellenstreifens 6 gebildet. Die Biegestellen 7, 8, an denen die Lamellen 1, 4 und 2, 5 zusammenhängen, bilden flächige Kreuzungsstellen des Gitters. Als Gitterebene ist eine Ebene A eingezeichnet, in der die Mitten 9, 10 der flächigen Kreuzungsstellen 7, 8 des Gitters liegen. Die Lamellen 1, 2, 4, 5 sind, wie alle übrigen Lamellen, unter einem Winkel $\alpha$ zur Gitterebene A geneigt, wobei von jeder Lamelle ein Teil über und ein Teil unter der Gitterebene A liegt. Die beiden zur Gitterebene A parallelen Begrenzungsebenen des Lamellengitters sind mit A' und A'' bezeichnet. Die Streifenbreite der Lamellenstreifen 3 ist mit s, die Dicke mit t und die Länge der größeren Diagonale der annähernd rhombischen Gittermasche mit u bezeichnet. Der Winkel, den die benachbarten, zickzackförmigen Lamellenstreifen 3, 6 an den Kreuzungsstellen 7, 8 miteinander bilden, d. h. der kleinere Winkel des Maschenrhombus ist mit $\beta$ bezeichnet.

Das bekannte Lamellengitter wird nach Art eines Streckmetalls hergestellt, indem ein Band in parallele, an mehreren Stellen zusammenhängende Streifen geschnitten wird, so daß die Schnittlinienabschnitte, zwischen denen die einander angrenzenden Streifen zusammenhängen, gleiche Länge haben und um die Hälfte der Länge gegenüber den benachbarten Schnittlinienabschnitten versetzt sind. Durch Auseinanderziehen der Streifen wird das beschriebene Lamellengitter erhalten.

Die Lamellengitter der Packungen der eingangs genannten Art werden zwar grundsätzlich in derselben Weise hergestellt wie Streckmetalle, sie sind aber von diesen zu unterscheiden und zwar dadurch, daß die Breite s der Lamellen wesentlich größer als deren Dicke t ist, wogegen bei üblichen Streckmetallen die Breite der Gitterstege etwa deren Dicke entspricht.

Packungen der eingangs genannten Art haben den Vorteil, daß mit geringem Materialaufwand in einfacher Weise eine große Packungsoberfläche erreicht werden kann. Dieser Vorteil ergibt sich aus der Lamellenstruktur der Gitter, d. h. daraus, daß die Lamellen dünne Blättchen mit im Vergleich zum Materialaufwand großer Oberfläche sind.

Der Vorteil der großen Packungsoberfläche läßt sich für den Stoffaustausch allerdings nur ausnützen, wenn einerseits dafür gesorgt ist, daß sich die Flüssigkeit gleichmäßig über die gesamte Packungsoberfläche verteilt und sämtliche Lamellenstreifen der Packung allseitig vollständig benetzt werden und andererseits gewährleistet ist, daß der Druckverlust, den das in der Kolonne aufsteigende Gas (bzw. der Dampf) beim Durchgang durch die Packung erfährt, möglichst gering ist, der gesamte Gasstrom quer zur Strömungsrichtung gleichmäßig verteilt über die Flüssigkeit strömt und keine Teilströme des Gases ohne Berührung mit der Flüssigkeit durch die Packung strömen können.

Für die Querverteilung der Flüssigkeit ist es erforderlich, daß die Packung selbst durch ihre Struktur die Flüssigkeit quer zur Strömungsrichtung verteilt. Es ist nämlich praktisch nicht möglich, die Flüssigkeit gleichmäßig über den Packungsquerschnitt verteilt zuzuführen. Selbst wenn man dies — mit großem Aufwand — erreichen könnte, würde dies noch nicht ausreichen, denn die Flüssigkeit kann innerhalb der Packung wieder zusammenfließen und Rinnsale bilden, wenn die Packungsstruktur nicht durch ständige Querverteilung der Flüssigkeit eine solche Rinnsalbildung vermeidet. Weiter sollte die Flüssigkeitsverteilung ohne Mithilfe der Gasströmung erfolgen, da sonst eine unerwünschte Abhängigkeit von der jeweiligen Gasbelastung besteht. Für einen optimalen Stoffaustausch muß ferner dafür gesorgt sein, daß sich die Flüssigkeitsoberfläche dauernd erneuert, d. h. der über die Packungsoberfläche rieselnde Flüssigkeitsfilm sollte einen möglichst hohen Grad an Turbulenz aufweisen.

Der Erfindung zugrunde liegende Versuche haben folgendes ergeben: Wenn man die Lamellengitter in der in der DE-A-2 005 295 gezeigten Weise anordnet, nämlich so, daß die Lamellenstreifen quer zur Strömungsrichtung (horizontal) verlaufen, so ist der Druckverlust, den das in der Kolonne aufsteigende Gas beim Durchgang die Packung erfährt jedenfalls dann außerordentlich groß, wenn die Lamellengitter ohne größere Zwischenräume nebeneinander angeordnet werden. Bei der aus der DE-OS 2 005 295 bekannten Packung sind offenbar aus diesem Grunde die Lamellengitter nicht regelmäßig aneinander sondern paarweise quer zueinander, in unregelmäßiger Lage, angeordnet. Dies hat einerseits den Nachteil, daß nur eine geringe spezifische Packungsoberfläche (Packungsoberfläche pro Packungsvolumen) erreicht wird und andererseits erhebliche Teile des Gases statt über die Flüssigkeit durch die Zwischenräume zwischen den Gitterpaaren strömen. Außerdem tropft bei dieser Anordnung der Lamellengitter ein nicht unerheblicher Teil der Flüssigkeit von den Lamellen ab, vor allem von den Enden der Lamellenstreifen, und bleibt für den Stoffaustausch ungenutzt. Wenn man die Lamellengitter zur Vermeidung dieser Nachteile entgegen der Lehre der DE-A-2 005 295 so anordnet, daß die Lamellenstreifen in Strömungsrichtung (vertikal) verlaufen, so fließt die Flüssigkeit in sich gegenseitig praktisch nicht beeinflussenden Teilströmen entlang den einzelnen Lamellenstreifen nach unten, und es wird weder die für eine vollständige und gleichmäßige Benetzung der gesamten Lamellenoberfläche erforderliche Querverteilung der Flüssigkeit noch die für die Durchmischung und Oberflächenerneuerung der Flüssigkeit erforderliche Turbulenz erreicht.

Der Erfindung liegt die Aufgabe zugrunde, eine einfach und billig herstellbare Packung der eingangs genannten Art zu schaffen, welche die flüssige Phase quer zur Strömungsrichtung gleichmäßig verteilt, einen hohen Turbulenzgrad in der flüssigen Phase erzeugt, und in welcher der Druckverlust des Gas- bzw. Dampfstroms auch bei großer spezifischer Packungsoberfläche möglichst gering ist.

Diese Aufgabe wird gemäß der Erfindung in vorrichtungsmäßiger Hinsicht durch die im Kennzeichen des Patentanspruchs 1 angegebenen Merkmale und in verfahrensmäßiger Hinsicht durch die im Kennzeichen des Patentanspruchs 14 angegebenen Merkmale gelöst. Bevorzugte Ausführungsarten der Packung sind Gegenstand der Patentansprüche 2 bis 13.

Indem die Lamellenstreifen in Strömungsrichtung verlaufen, wird auch bei einer hohen Packungsdichte, wie sie sich vor allem durch die Anordnung der Gitter nach Anspruch 6 und insbesondere nach Anspruch 8 erreichen läßt, ein hoher Druckverlust des Gas- bzw. Dampfstromes vermieden. Durch die erfindungsgemäße Ausgestaltung der Lamellenstreifen an den Kreuzungsstellen, d. h. die die Strömungsrichtung an den Kreuzungsstellen ändernden Strömungsführung, wird ein Teil der auf einem Lamellenstreifen herabströmenden flüssigen Phase über die Kreuzungsstelle zum benachbarten Lamellenstreifen abgelenkt. Dadurch wird die flüssige Phase quer zur Strömungsrichtung gleichmäßig über das Gitter verteilt, und es entsteht eine hohe Turbulenz im Flüssigkeitsfilm.

Für die erfindungsgemäße Strömungsführung an den Kreuzungsstellen können gemäß Anspruch 2 beidseits jeder Kreuzungsstelle die äußeren Ränder der beiden Lamellenstreifen je eine Aussparung haben. Dadurch wird zudem die Abmessung der Kreuzungsflächen quer zur Strömungsrichtung verringert. Zur Führung der Flüssigkeit können die in die Kreuzungsstellen führenden Lamellenstreifenabschnitte aber auch entsprechend gerichtete Erhebungen oder Vertiefungen, z. B. Rillen, haben. Die beiden nach unten zu einer Kreuzungsstelle konvergierenden Lamellenabschnitte benachbarter Lamellenstreifen verlaufen vorzugsweise in einem spitzen Winkel zueinander, wobei die Führungsrichtungen der an den Kreuzungsstellen vorgesehenen Strömungsführungen benachbarter Lamellenstreifen in einem gegenüber diesem Winkel größeren Winkel zueinander verlaufen.

Im folgenden werden anhand der Zeichnung Ausführungsbeispiele der Erfindung näher erläutert. Es zeigt

Fig. 2 eine Seitenansicht eines Teils einer Packung aus aneinander geschichteten Lamellengittern,

Fig. 3 einen Querschnitt durch den Packungsteil von Fig. 2 nach der Linie III-III in Fig. 2,

Fig. 4 eine Seitenansicht eines Teils einer anderen Packung, die aus denselben, jedoch anders aneinander geschichteten Lamellengittern wie die Packung von Fig. 2 und 3 besteht,

Fig. 5 einen Querschnitt durch den Packungsteil von Fig. 4 nach der Linie V-V in Fig. 4,

Fig. 6 eine Kreuzungsstelle eines der Lamellengitter von Fig. 2 bis 5 mit die Strömungsrichtung der Flüssigkeit angebenden Pfeilen, in größerem Maßstab,

Fig. 7 und 8 einen Teil eines Lamellengitters der Packung von Fig. 2 bis 5 in kleinerem Maßstab, und ein für dessen Herstellung vorbereitetes Band,

Fig. 9 einen schematischen Achsenlängsschnitt durch mehrere übereinander in eine Kolonne eingesetzte Packungen, und

Fig. 10 eine Draufsicht auf eine der Packungen von Fig. 9 in größerem Maßstab,

Fig. 11 eine Variante der Kreuzungsstelle von Fig. 6,

Fig. 12 zwei Maschen einer Variante der Lamellengitter von Fig. 2 bis 5,

Fig. 13 zwei Maschen einer weiteren Variante der Lamellengitter von Fig. 2 bis 5,

Fig. 14 ein Lamellengitter mit seitlichen Aussparungen für eine Packung mit ineinandergreifenden Lamellengittern,

Fig. 15 einen Querschnitt durch einen Teil einer Packung mit ineinandergreifenden Lamellengittern, in größerem Maßstab,

Fig. 16 ein Lamellengitter, dessen Lamellenstreifen abwechselnd mit Löchern versehen sind und

Fig. 17 zwei Maschen einer Variante der Lamellengitter von Fig. 2 bis 5.

Jede der im folgenden näher beschriebenen Packungen besteht aus mehreren, unmittelbar aneinander geschichteten Lamellengittern.

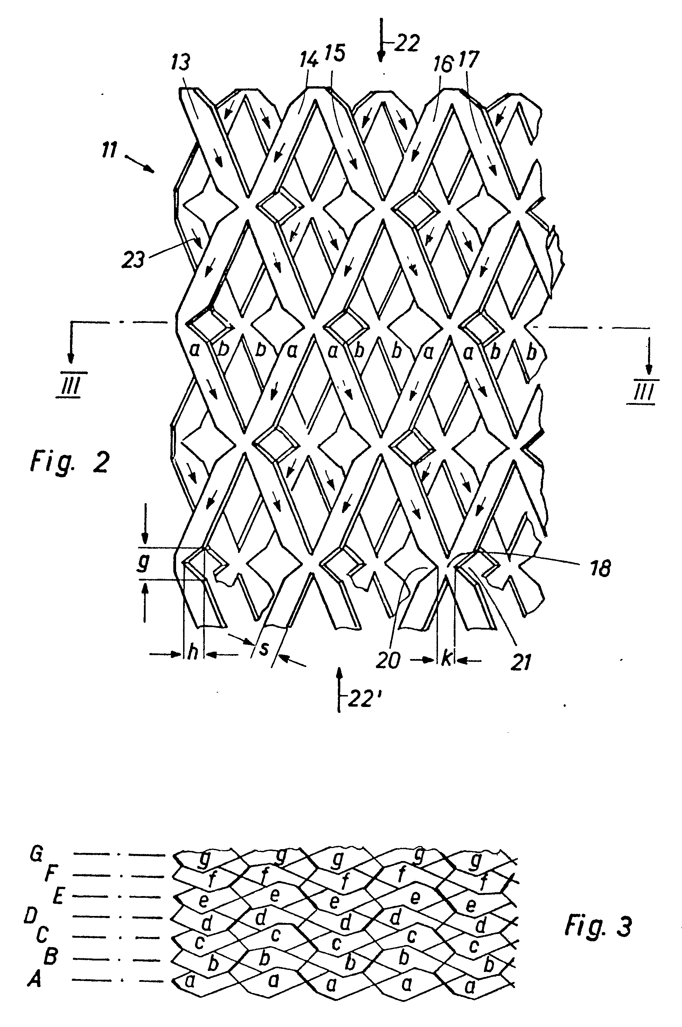

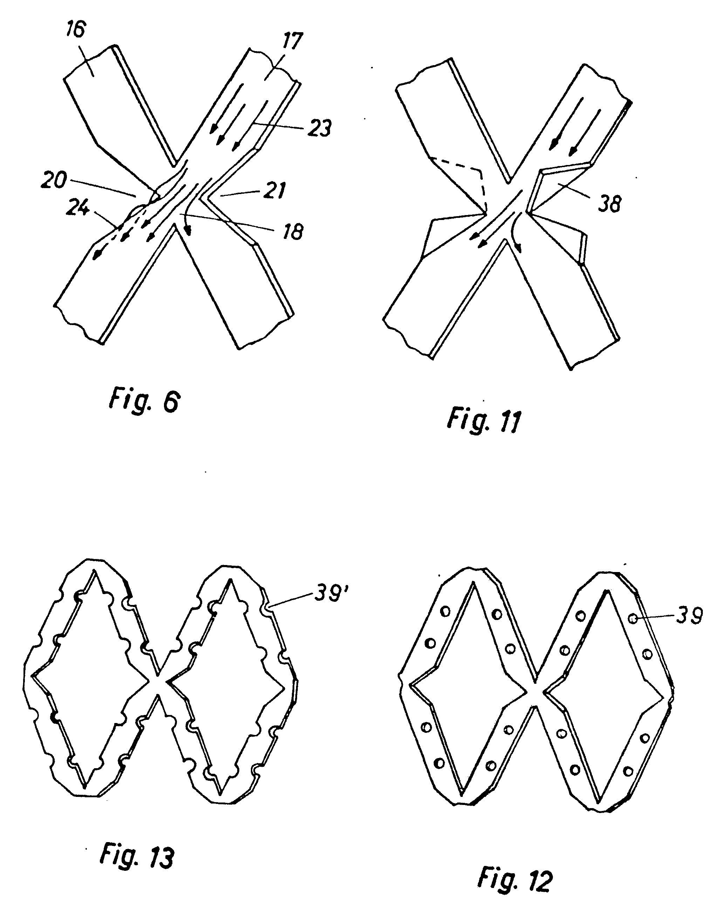

Die Lamellengitter der in Fig. 2, 3 und 4, 5 dargestellten Packungen 11 und 12 sind alle gleich gestaltet und bestehen aus annähernd zickzackförmig gebogenen Lamellenstreifen 13—17, die an ihren Biegestellen 18 einstückig zusammenhängen und dort flächige Kreuzungsstellen des Gitters bilden. Die benachbarten zickzackförmigen Lamellenstreifen 13—17 jedes Gitters haben beidseits jeder Kreuzungsstelle 18 an ihren äußeren Rändern, dreieckige Aussparungen 20, 21 (Fig. 2 und 6), so daß die an die Kreuzungsstellen angrenzenden Teile der Lamellen in Richtung auf die Kreuzungsstellen verjüngt sind. Die Aussparungen 20, 21 sind in der Richtung, in der die Lamellenstreifen zickzackförmig verlaufen, länger als die Breite s eines Lamellenstreifens und quer dazu tiefer als die Hälfte der Streifenbreite s. In Fig. 2 sind die Länge und die Tiefe der Aussparungen, die der Grundseite und der zugehörigen Höhe des Aussparungsdreiecks entsprechen, mit g und h bezeichnet. Weil die Tiefe h der Aussparungen größer als die Hälfte der Breite s ist, ist die Breite k der Kreuzungsflächen an der schmalsten Stelle kleiner als die Breite s eines Lamellenstreifens.

Die Lamellengitter können, wie Fig. 2, 3 und 4, 5 beispielsweise zeigen, in verschiedener Weise regelmäßig aneinander geschichtet sein, wobei je nach der Art der Schichtung verschieden dichte Packungen, d. h. Packungen mit unterschiedlicher spezifischer Oberfläche erhalten werden. In den Fig. 2, 3 und 4, 5 sind jeweils die Lamellen des ersten Gitters mit a, diejenigen des zweiten Gitters mit b usw. bezeichnet. Die Gitterebenen sind mit den Buchstaben A, B, usw. bezeichnet.

Bei den beiden Packungen 11 und 12 sind die Lamellen des ersten, dritten, fünften, usw. Gitters a, c, . . ., im gleichen Sinn und die Lamellen des zweiten, vierten, sechsten, usw. Gitters b, d, f, . . ., im entgegengesetzten Sinn zu den Gitterebenen geneigt. Dies wird mit genau gleich gestalteten Gittern erreicht, indem beim Aufeinanderschichten der Gitter zur Packung 11 bzw. 12 das zweite, vierte, usw. Gitter jeweils um 180° in der Gitterebene gegen das erste, dritte, usw. Gitter gedreht wird.

Bei der Packung 11 liegen die Mitten der Kreuzungsstellen des ersten, dritten, fünften usw. Gitters a, c, e, . . ., auf gemeinsamen, zu den Gitterebenen senkrechten Fluchtlinien und entsprechend liegen die Mitten der Kreuzungsstellen des zweiten, vierten, sechsten usw. Gitters b, d, f, . . ., auf gemeinsamen, durch die Mitten der Maschen des ersten, dritten, fünften, usw. Gitters a, c, e, . . ., verlaufenden, zu den Gitterebenen senkrechten Fluchtlinien. Damit wird eine besonders dichte Packung, d. h. eine besonders hohe spezifische Packungsoberfläche erreicht. Die zur Gitterebene parallelen Begrenzungsebenen jedes Gitters fallen dabei mit den Gitterebenen der beiden benachbarten Gitter zusammen, so daß die gesamte Dicke jeweils dreier aufeinanderfolgender Gitter lediglich der doppelten Dicke eines einzelnen Gitters entspricht.

Bei der Packung 12 liegen die Mitten der Kreuzungsstellen sämtlicher Gitter a, b, c, . . ., auf gemeinsamen Fluchtlinien, die Packung hat eine geringere spezifische Oberfläche als die Packung 11, dafür ist aber der Druckverlust der Gasphase etwas kleiner.

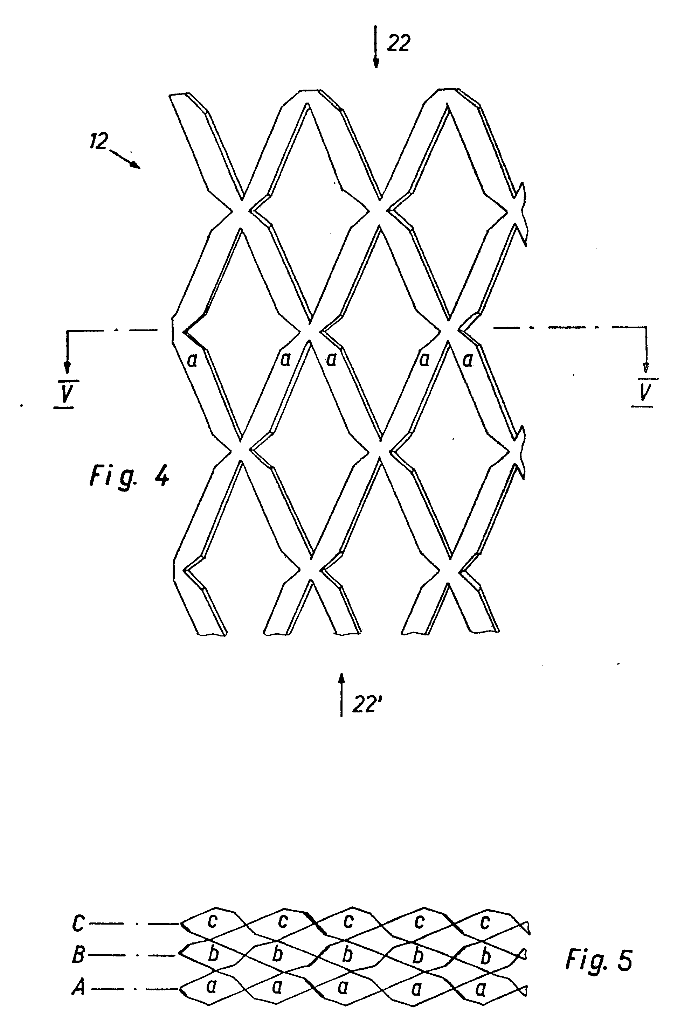

Die Packungen werden so in die Kolonne eingesetzt, daß die zickzackförmig gebogenen Lamellenstreifen 13—17 in Achsenlängsrichtung der Kolonne, d. h. in der Richtung verlaufen, in der die Flüssigkeit bzw. das Gas der Packung zugeführt wird. In Fig. 2 und 4 ist die Anströmrichtung der Flüssigkeit durch einen Pfeil 22, die Anströmrichtung des Gases durch einen Pfeil 22' angedeutet. Die zugeführte Flüssigkeit fließt, wie in Fig. 2 durch Pfeile 23 angedeutet, auf den Lamellenstreifen 13—17 nach unten. Wie Fig. 6 zeigt, wird die auf dem Lamellenstreifen 17 zu einer der Kreuzungsstellen 18 herabströmende Flüssigkeit 23 infolge der verjüngten Lamellengestalt so gelenkt, daß sie quer über die Kreuzungsstelle 18 zum benachbarten Lamellenstreifen 16 fließt. Dadurch ergibt sich eine optimale Querverteilung der Flüssigkeit und, wenn auch der benachbarte Lamellenstreifen 16 Flüssigkeit führt (nicht dargestellt), eine optimale Durchmischung und Oberflächenerneuerung der beiden Flüssigkeitsströme an den Kreuzungsstellen. Wie Fig. 6 auch zeigt, fließt ein Teil der Flüssigkeit unmittelbar nach Passieren der Kreuzungsstelle von der oberen Lamellenfläche um die die Aussparung 20 begrenzende Kante 24 auf die untere Lamellenfläche. Dadurch ist gewährleistet, daß die Flüssigkeit beide Lamellenseiten bedeckt und die auf den beiden Lamellenseiten herabfließende Flüssigkeit an den Kreuzungsstellen stets wieder durchmischt wird, so daß eine sehr große und dauernd erneuerte Flüssigkeitsoberfläche für den Stoffaustausch zur Verfügung steht.

Während einerseits mit den sich durch die Aussparungen 20, 21 ergebenden Verengungen der Lamellenstreifen 13—17 an den Kreuzungsstellen 18 eine optimale Querverteilung der Flüssigkeit in den einzelnen Lamellengittern erreicht wird, wird andererseits durch die unmittelbare Aneinanderschichtung sämtlicher Lamellengitter einer Packung aber auch eine gewisse, wenn auch geringe Querverteilung der Flüssigkeit zwischen den einzelnen Gittern, also quer zu den Gitterebenen und eine Wechselwirkung zwischen den Flüssigkeitsströmen benachbarter Gitter erreicht. Dabei entsteht insbesondere bei der Packung 11 auch eine gewisse Turbulenz, weil die durch die Pfeile 23 in Fig. 2 angedeuteten Flüssigkeitsströme auf den sich berührenden Lamellen benachbarter Gitter in einem Winkel aufeinander zu fließen.

Mit den Packungen 11, 12 wird auch in der Gas- bzw. Dampfphase sowohl Turbulenz wie auch eine gute Querverteilung erreicht. Dies insbesondere deshalb, weil die Lamellen benachbarter Gitter schräg zueinander stehen und bei der Packung 11 außerdem die Lamellen in die Maschen der benachbarten Gitter hineinragen.

Die Packung 11 hat sich für die üblichen Anwendungen der Rektifikation und Absorption als besonders vorteilhaft erwiesen, insbesondere weil sie eine sehr hohe spezifische Oberfläche hat und trotzdem nur einen geringen Druckverlust in der Gasphase verursacht. Für spezielle Anwendungszwecke, bei denen unter äußerst niedrigem Druck gearbeitet werden muß, kann dagegen die Packung 12 besser geeignet sein.

In diesem Zusammenhang ist noch darauf hinzuweisen, daß die beschriebene Querverteilung der Flüssigkeit sowohl in den wie auch zwischen den Lamellengittern unabhängig von der Gasströmung erfolgt, sie ist also auch bei nur geringer Gasströmung stets optimal gewährleistet.

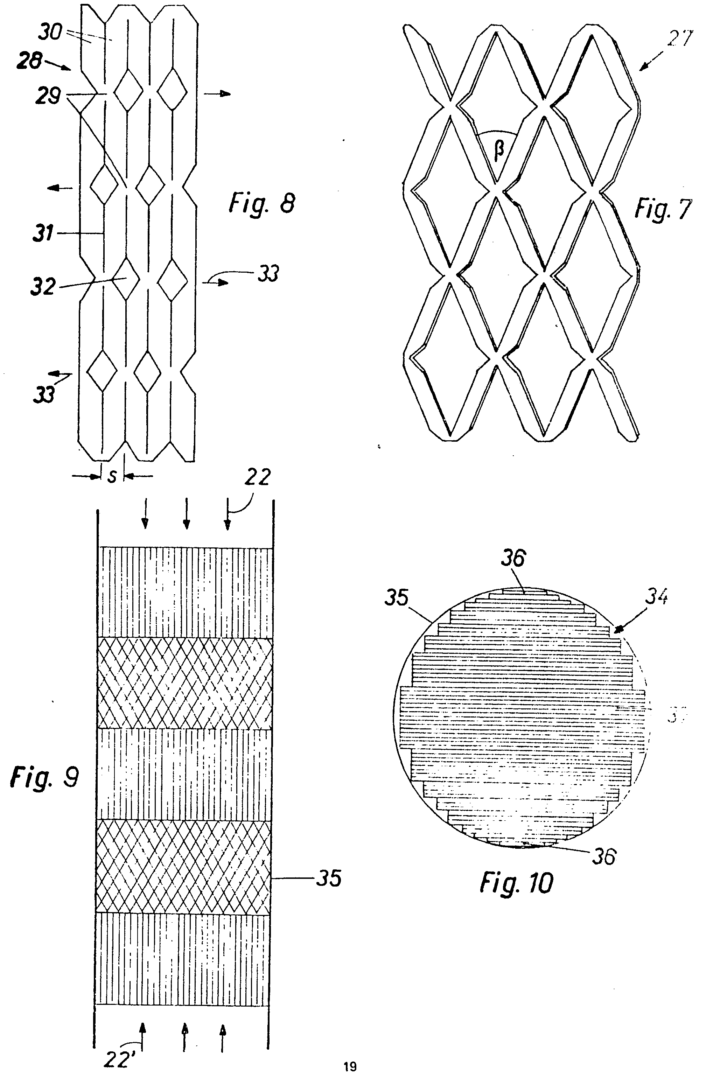

Die Herstellung der Packungen 11, 12 wird im folgenden anhand Fig. 7 bis 10 erläutert. Das in Fig. 7 dargestellte Lamellengitter 27, das den Gittern der Packungen 11, 12 entspricht, wird aus dem in Fig. 8 dargestellten Metallband 28 wie folgt erhalten: Das dünne Band 28 wird in mehrere parallele, je an mehreren Stellen 29 zusammenhängende Streifen 30 geschnitten und zwar so, daß die Schnittlinienabschnitte 31, zwischen denen die aneinander angrenzenden Streifen 30 an den Stellen 29 zusammenhängen, gleiche Länge haben und um die Hälfte der Länge gegenüber den benachbarten Schnittlinienabschnitten 31 versetzt sind. Die Streifenbreite s wird dabei groß gegenüber der Dicke t des Bands 28 gewählt, vorzugsweise so, daß sie das Zwanzig- bis Dreißigfache der Banddicke 6 beträgt.

In der Mitte jedes der Schnittlinienabschnitte 31 wird ein rhombisches Loch 32 in die beiden aneinander angrenzenden Streifen 30 gestanzt. Die Längen der beiden Diagonalen des Lochrhombus werden dabei größer als die Streifenbreite s gewählt und zwar derart, daß die oben angegebenen vorteilhaften Abmessungen der Länge g und Tiefe h der Aussparungen 20, 21 im auseinandergezogenen Zustand des Gitters erhalten werden. Darauf werden die Streifen 30 in Richtung der Pfeile 33 auseinander gezogen und zwar so weit, daß der Winkel $\beta$, den die benachbarten Streifen 30 an den Stellen 29, an denen sie zusammenhängen, miteinander bilden, vorzugsweise mindestens 45° und höchstens 90° beträgt. Nach dem Auseinanderziehen der Streifen 30 ist das Lamellengitter 27 mit den zickzackförmig verlaufenden Lamellenstreifen entstanden, deren Lamellen zur Gitterebene geneigt sind. Der Neigungswinkel $\alpha$, der vom Maß abhängt, in dem die Streifen 30 auseinandergezogen werden, kann durch anschließende Bearbeitungsschritte vergrößert oder verkleinert werden. Er wird vorzugsweise im Bereich zwischen 25 und 75° gewählt. Die in dieser Weise erhaltenen Lamellengitter 27 werden dann aufeinandergeschichtet und miteinander verbunden, z. B. einfach mittels Drähten fest zusammengebunden oder miteinander verschweißt.

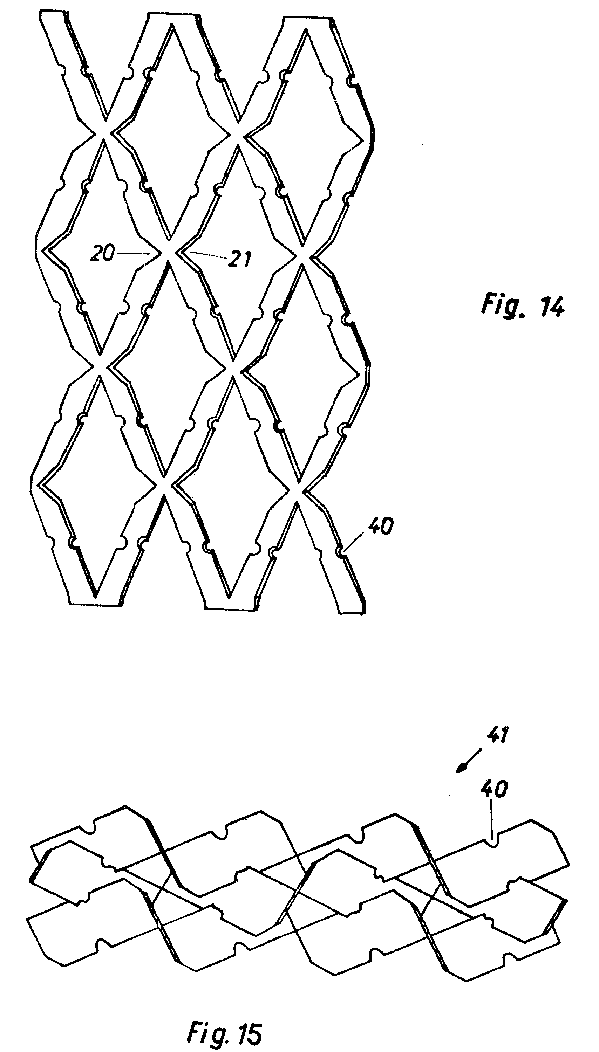

Wie Fig. 10 zeigt, kann die Packung einem runden Kolonnenquerschnitt angepaßt werden, indem Gitter mit schrittweise zu- und wieder abnehmender Anzahl von Lamellenstreifen und damit zu- und abnehmender Breite aneinander geschichtet werden, so daß der Querschnitt der Packung 34 eine stufenweise dem runden Kolonnenquerschnitt 35 angepaßte Form erhält. Von der Packung 34 sind die beiden schmalsten Gitter mit 36 und eines der insgesamt vierzehn breitesten Gitter mit 37 bezeichnet. Wesentlich ist, daß die Gitter nur durch schrittweises Hinzufügen bzw. Weglassen je eines Lamellenstreifens dem Kolonnenquerschnitt stufenweise angepaßt werden und die beiden äußersten zickzackförmigen Lamellenstreifen jedes Gitters nicht zur genauen Anpassung an den Kolonnenquerschnitt unterbrochen werden. Dadurch wird erreicht, daß die auf den beiden äußersten Lamellenstreifen herabfließende Flüssigkeit weder abtropft noch entlang der ganzen Streifenlänge herabfließt, sondern, wie oben erläutert, quer über die Kreuzungsstellen zu den benachbarten Lamellenstreifen und damit wieder in das Innere der Packung zurückfließt. Durch diese stufenweise Anpassung der Packung an den Kolonnenquerschnitt entstehen natürlich unvermeidlicherweise Leerräume zwischen dem Packungsrand und der Kolonnenwand. Diese sind bei größeren Kolonnendurchmessern vernachlässigbar und können zudem, z. B. durch ein eingeschnittenes, um die Packung gelegtes Gewebeband, ausgefüllt werden, womit auch eine unerwünschte Gasströmung entlang der Kolonnenwand vermieden wird.

Wie in Fig. 9 schematisch dargestellt ist, werden in eine Kolonne für die Rektifikation oder die Absorption mehrere Packungen übereinander mit zur Kolonnenachse parallelen Lamellengittern eingesetzt. Die Gitter aneinander angrenzender Packungen werden annähernd rechtwinklig zueinander angeordnet, d. h. die Packungen werden beim Einsetzen jeweils um 90° gegen die vorangehende Packung gedreht. Damit wird eine besonders homogene Querverteilung der in Richtung der Pfeile 22 durch die Kolonne fließenden Flüssigkeit und des in Richtung der Pfeile 22' strömenden Gases erreicht, indem Unterschiede zwischen der Querverteilung der Phasen in den Lamellengittern und der Querverteilung der Phasen quer zu den Gitterebenen einer Packung ausgeglichen werden.

Wie erwähnt können die Lamellengitter auch in anderer Weise aneinandergeschichtet sein als bei den Packungen 11, 12. Zum Beispiel können die Lamellen sämtlicher Gitter im gleichen Sinn zu den Gitterebenen geneigt sein. Dabei können die Gitter gleich wie die Gitter der Packung 11 gegeneinander versetzt sein, d. h. die Mitten der Kreuzungsstellen der geradzahligen Gitter können auf gemeinsamen, durch die Mitten der Maschen der ungeradzahligen Gitter verlaufenden Fluchtlinien liegen. Es ergibt sich in diesem Fall eine Packungsdichte, die zwischen denjenigen der Packungen 11 und 12 liegt. Die Gitter können aber auch anders gegeneinander versetzt sein, z. B. können die Mitten der Kreuzungsstellen der Gitter so gegeneinander versetzt werden, daß die Schnittlinien, in denen eine horizontale Schnittebene die flächigen Kreuzungsstellen der aneinandergeschichteten Gitter schneidet, miteinander fluchten. Die Packungsdichte entspricht dann derjenigen der Packung 12. Durch geeignetes Versetzen der Gitter mit im gleichen Sinn zu den Gitterebenen geneigten Lamellenstreifen läßt sich ferner eine ebenso dichte Packung wie bei der Packung 11 erreichen. Dabei fallen, wie bei der Packung 11, die zur Gitterebene parallelen Begrenzungsebenen jedes Gitters mit den Gitterebenen der beiden benachbarten Gitter zusammen.

Die Lamellenstreifen können auch anders gestaltet sein, um die Flüssigkeit über die Kreuzungsstellen zu lenken. Bei der in Fig. 11 dargestellten Variante sind zu diesem Zweck von den Lamellenstreifen beidseits jeder Kreuzungsstelle dreieckförmige Lappen 38 abgebogen. Zur Führung der Flüssigkeit über die Kreuzungsstellen könnten die Lamellenstreifen ferner an den Kreuzungsstellen Erhebungen oder Vertiefungen, z. B. eine Riffelung oder Rillen aufweisen, die entsprechend dem gewünschten Verlauf der Flüssigkeitsströme von einer Lamelle des einen Lamellenstreifens über die Kreuzungsstelle zur folgenden Lamelle des benachbarten Lamellenstreifens verlaufen. Ferner könnten die äußeren Ränder der Lamellenstreifen auch anders geformte, z. B. halbkreisförmige Aussparungen aufweisen.

Um den Druckverlust der Gasphase weiter zu vermindern und außerdem die Turbulenz in der flüssigen Phase zu erhöhen, können die Lamellen zudem, wie in Fig. 12 und 13 dargestellt, mit Löchern 39 oder seitlichen Aussparungen 39' versehen sein.

Wie oben erläutert, erfolgt die Querverteilung der Flüssigkeit einerseits in den Lamellengittern und andererseits zwischen den Lamellengittern einer Packung. Das Maß der Flüssigkeitsverteilung ist bei den bisher beschriebenen Packungen jedoch nicht gleich: Die Flüssigkeit verteilt sich besser in den einzelnen Gittern als zwischen diesen. Um auch eine optimale Querverteilung der Flüssigkeit von Gitter zu Gitter zu erreichen, kann die Packung so ausgestaltet werden, daß die Lamellen benachbarter Gitter an ausgesparten Randteilen ineinandergreifen. Fig. 14 zeigt ein für eine solche Packung bestimmtes Lamellengitter mit ausgesparten Randteilen 40, Fig. 15 einen Querschnitt durch einen Teil einer solchen Packung 41. Die Lamellengitter dieser Packung 41 sind ähnlich wie diejenigen der Packung 11 angeordnet, indem die Lamellen aneinander angrenzender Gitter im entgegengesetzten Sinn zu den Gitterebenen geneigt sind und die Mitten der Kreuzungsstellen der geradzahligen Gitter auf gemeinsamen, durch die Mitten der Maschen der ungeradzahligen Gitter verlaufenden Fluchtlinien liegen. Es ist offensichtlich, daß bei der Packung 41 die Flüssigkeit von den Rändern der Lamellen des einen Gitters auf die Lamellen der benachbarten Gitter strömt, wobei neben der guten Querverteilung von Gitter zu Gitter auch ein hoher Grad an Turbulenz entsteht. Die Packung 41 hat zudem den Vorteil einer besonders hohen Packungsdichte. Selbstverständlich werden auch bei der Packung 41 die Kreuzungsstellen so gestaltet, daß die flüssige Phase quer über die Kreuzungsstellen strömt, wozu vorzugsweise die äußeren Ränder der Lamellenstreifen mit den Aussparungen 20, 21 versehen sind, wie in Fig. 14 und 15 dargestellt.

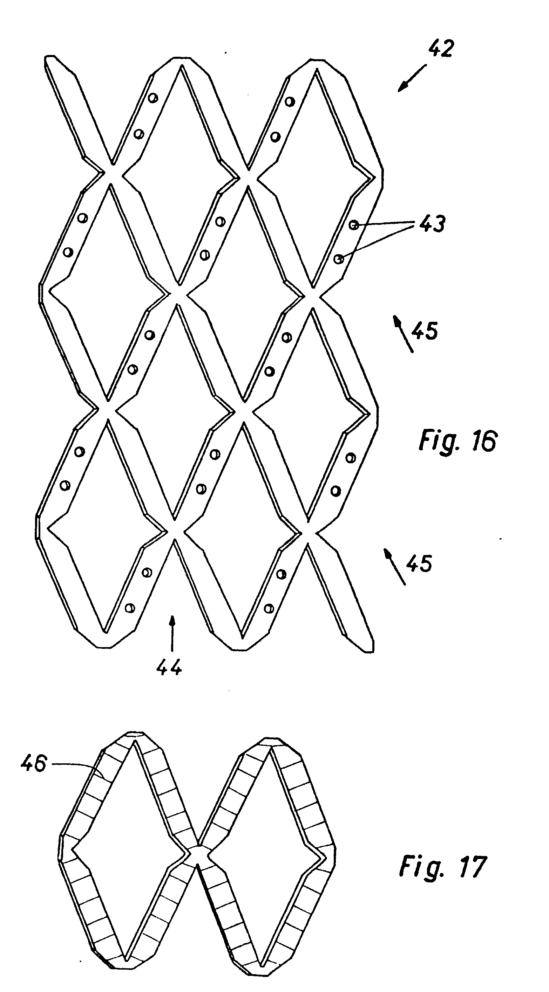

Bei dem in Fig. 16 dargestellten Lamellengitter 42 sind die zickzackförmig aufeinanderfolgenden Lamellen jedes Lamellenstreifens abwechselnd mit Lochpaaren 43 versehen, wobei anstelle oder zusätzlich zu den Lochpaaren auch seitliche Aussparungen 39' gemäß Fig. 13 vorgesehen sein könnten. Dadurch wird die Gasströmung zusätzlich zur Ablenkung durch die Lamellen quer zur Strömungsrichtung 44 gelenkt, indem der Gasströmung durch diese abwechselnde Lochung 43 ein schräg zur Strömungsrichtung 44 nach oben verlaufender Weg in Richtung der Pfeile 45 geöffnet wird.

Die Lamellenstreifen können ferner mit quer zur Streifenlängsrichtung verlaufenden Erhebungen oder Vertiefungen versehen sein. Als Beispiel dafür zeigt Fig. 17 zwei Maschen eines aus einem Riffelblech hergestellten Lamellengitters mit quer zur Streifenlängsrichtung verlaufender Riffelung 46. Packungen aus solchen Lamellengittern sind insbesondere für nicht bzw. unvollkommen benetzende Flüssigkeiten vorteilhaft, bei denen die Querriffelung eine Tropfen- oder Rinnsalbildung verhindert und eine gleichmäßige Verteilung über die Lamellenoberfläche sicherstellt. Außerdem wird durch die Riffelung 46 erreicht, daß auch zwischen den Kreuzungsstellen in der flüssigen Phase Turbulenz entsteht.

Die bisher beschriebenen Lamellengitter bestehen alle aus dünnem Metallblech. Die Lamellengitter könnten aber auch aus einer Kunststofffolie oder einem Gewebeband hergestellt werden.

## Patentansprüche

1. Packung für Stoffaustauschkolonnen, bestehend aus mehreren Lamellengittern (a, b, c, ...), wobei jedes Gitter (a, b, c, ...) aus annähernd zickzackförmig gebogenen, zur Gitterebene (A, B, C, ...) geneigten Lamellenstreifen (13—17) besteht, die an ihren Biegestellen (18) einstückig zusammenhängen und dort flächige Kreuzungsstellen des Gitters bilden, dadurch gekennzeichnet, daß die in Strömungsrichtung verlaufenden Lamellenstreifen (13—17) an den Kreuzungsstellen (18) eine Strömungsführung (20, 21, 38) aufweisen, durch welche die Strömungsrichtung der auf einem Lamellenstreifen (17) herabströmenden, flüssigen Phase (22) derart ändert, daß ein Teil derselben (23) über die Kreuzungsstelle (18) zum benachbarten Lamellenstreifen (16) abgelenkt wird.

2. Packung nach Anspruch 1, dadurch gekennzeichnet, daß an jeder Kreuzungsstelle (18) die äußeren Ränder der beiden Lamellenstreifen (13—17) je eine Aussparung (20, 21) haben.

3. Packung nach Anspruch 2, dadurch gekennzeichnet, daß die Aussparungen (20, 21) in der Richtung, in der die Lamellenstreifen (13—17) zickzackförmig verlaufen, länger als die Breite (s) eines Lamellenstreifens und quer dazu tiefer als die Hälfte dieser Breite (s) sind.

4. Packung nach einem der Ansprüche 1 bis 3, dadurch gekennzeichnet, daß die Lamellenstreifen (13—17) zwischen den Kreuzungsstellen (18) Löcher (39; 43) und/oder seitliche Aussparungen (39') aufweisen.

5. Packung nach Anspruch 4, dadurch gekennzeichnet, daß die zickzackförmig aufeinanderfolgenden Lamellen jedes Lamellenstreifens (13—17) abwechselnd mit den Löchern (43) und/oder seitlichen Aussparungen versehen sind.

6. Packung nach einem der Ansprüche 1 bis 5, dadurch gekennzeichnet, daß sämtliche Lamellengitter (a, b, c, . . .) unmittelbar aneinander geschichtet sind.

7. Packung nach Anspruch 6, dadurch gekennzeichnet, daß die Lamellenstreifen des ersten, dritten, fünften, usw. Gitters (a, c, e, . . .) im gleichen Sinn und die Lamellenstreifen des zweiten, vierten, sechsten, usw. Gitters (b, d, f, . . .) im entgegengesetzten Sinn zu den Gitterebenen (A, B, C, . . .) geneigt sind.

8. Packung nach Anspruch 6 oder 7, dadurch gekennzeichnet, daß die Lamellengitter (a, b, c, . . .) so gegeneinander versetzt aneinandergeschichtet sind, daß die Lamellenstreifen jedes Gitters in die Maschen der beiden benachbarten Gitter hineinragen.

9. Packung nach Anspruch 8, dadurch gekennzeichnet, daß die Lamellenstreifen benachbarter Gitter an ausgesparten Randteilen (40) ineinander greifen.

10. Packung nach Anspruch 8 oder 9, dadurch gekennzeichnet, daß die Mitten der Kreuzungsstellen des ersten, dritten, fünften, usw. Gitters (a, c, e, . . .) auf gemeinsamen, zu den Gitterebenen (A, B, C, . . .) senkrechten Fluchtlinien und die Mitten der Kreuzungsstellen des zweiten, vierten, sechsten, usw. Gitters (b, d, f, . . .) auf gemeinsamen, durch die Mitten der Maschen des ersten, dritten, fünften, usw. Gitters (a, c, e, . . .) verlaufenden, zu den Gitterebenen (A, B, C, . . .) senkrechten Fluchtlinien liegen.

11. Packung nach einem der Ansprüche 6 bis 10, dadurch gekennzeichnet, daß Gitter (36, 37) mit unterschiedlicher Anzahl von Lamellenstreifen aneinander geschichtet sind, so daß der Packungsquerschnitt (34) eine stufenweise einem runden Kolonnenquerschnitt (35) angepaßte Form hat und die beiden äußersten zickzackförmigen Lamellenstreifen jedes Gitters nicht unterbrochen sind.

12. Packung nach einem der Ansprüche 1 bis 11, dadurch gekennzeichnet, daß die Lamellenstreifen mit quer zur Streifenlängsrichtung verlaufenden Erhebungen oder Vertiefungen versehen, beispielsweise geriffelt (46) sind.

13. Packung nach einem der Ansprüche 1 bis 12, dadurch gekennzeichnet, daß die Breite (s) der Lamellenstreifen (13—17) das Zwanzig- bis Dreißigfache von deren Dicke (t) beträgt.

14. Verfahren zur Herstellung der Packung nach Anspruch 1, bei dem für die Herstellung der Lamellengitter Bänder (28) in parallele, je an mehreren Stellen (29) zusammenhängende Streifen (30) geschnitten werden, so daß die Schnittlinienabschnitte (31), zwischen denen die aneinander angrenzenden Streifen (30) zusammenhängen, gleiche Länge haben und um die Hälfte der Länge gegenüber den benachbarten Schnittlinienabschnitten (31) versetzt sind, und die Streifen (30) danach auseinandergezogen (33) werden, dadurch gekennzeichnet, daß in der Mitte jedes Schnittlinienabschnitts (31) ein Loch (32) in die beiden aneinander angrenzenden Streifen (30) gestanzt oder gebohrt wird, das vorzugsweise länger und breiter als die Breite (s) eines Streifens (30) ist, und die Streifen (30) erst danach auseinandergezogen werden.

## Claims

1. Packing for material exchange columns, consisting of a plurality of plate lattices (a, b, c, . . .), each lattice (a, b, c, . . .) consisting of plate strips (13—17) inclined to the plane (A, B, C, . . .) of the lattice and bent approximately into a zig-zag shape, the strips being integrally connected at the places (18) where they are bent and forming at those locations two-dimensional intersections of the lattice, characterized in that the plate strips (13—17) which extend in the direction of flow have at the intersections (18) a flow guide (20, 21, 32) by which the direction of flow of the liquid phase (22) which is flowing down and over the plate strips (17) is so altered that a part (23) of the flow is deflected via the intersection (18) to the adjacent plate strip (16).

2. Packing according to claim 1, characterized in that at each intersection (18) the outer edges of the two plate strips (13—17) each having a cut-out (20, 21).

3. Packing according to claim 2, characterized in that the cut-outs (20, 21) extend in the direction in which the plate strips (13—17) extend in zig-zag form, are longer than the width (s) of a plate strip and transversely there-to are deeper than half of this width (s).

4. Packing according to one of claims 1 to 3, characterized in that the plate strips (13—17) have holes (3; 43) and/or lateral cut-outs (39') between the intersections (18).

5. Packing according to claim 4, characterized in that the plates of each plate strip (13—17) which follow on from one another in zig-zap form are alternately provided with the holes (43) and/or lateral cut-outs.

6. Packing according to one of claims 1 to 5, characterized in that all the plate lattices (a, b, c, . . .) are layered immediately one upon another.

7. Packing according to claim 6, characterized in that the plate strips of the first, third, fifth, etc., lattice (a, c, e, . . .) are inclined in the same direction as while the plate strips of the second, fourth, sixth, etc., lattice (b, d, f, . . .) are inclined in the opposite direction to the lattice planes (A, B, C, . . .).

8. Packing according to claim 6 or 7, characterized in that the plate lattices (a, b, c, . . .) are staggered so one against another that the plate strips of each lattice protrude into the meshes of the two adjacent lattices.

9. Packing according to claim 8, characterized in that the plate strips of adjacent lattices engage in one another at cut-out marginal portions (40).

10. Packing according to claim 8 or 9, characterized in that the centres of the intersections of the first, third, fifth, etc., lattice (a, c, e, . . .) lie on common alignments at a right-angle to the lattice planes (A, B, C, . . .) while the centres of the intersections of the second, fourth, sixth, etc., lattice (b, d, f, . . .) lie on common alignments at a right-angle to the lattice planes (A, B, C. . . .) which extend through the centres of the meshes of the first, third, fifth, etc., lattice (a, c, e, . . .).

11. Packing according to one of claims 6 to 7, characterized in that lattices (36, 37) having a differing number of plate strips are layered on one another so that the packing cross-section (34) has a form adapted stepwise to a round column cross-section (35) while the two outermost zig-zag shaped plate strips of each lattice are not interrupted.

12. Packing according to one of claims 1 to 11, characterized in that the plate strips are provided with raised or lowered parts which extend transversely of the longitudinal direction of the strip and are, for example, ribbed (46).

13. Packing according to one of claims 1 to 12, characterized in that the width (s) of the plate strips (13—17) is twenty to thirty times its thickness (t).

14. A method of manufacturing the packing according to claim 1 in which, for manufacturing the plate lattices, belts (28) are cut into parallel strips (30) which are connected to one another at a plurality of locations (29), so that the portions (31) of the lines of intersection between which the adjacently disposed strips (30) are inter-connected, are of the same length and are staggered by half the length of the adjacent portions (31) of the lines of intersection, while the strips (30) are subsequently drawn apart (33), characterized in that a hole (32) is stamped or drilled in the centre of each portion (31) of the line of intersection, and into the two adjacently disposed strips, the hole being preferably longer and wider than the width (s) of a strip (30), the strips (30) only then being pulled apart.

### Revendications

1. Garniture pour colonnes d'échange de matières, comprenant plusieurs treillis à lamelles (a, b, c . . .), chaque treillis (a, b, c . . .) étant constitué par des lamelles en bande (13—17) qui sont coudées approximativement en zigzag, sont inclinées par rapport au plan (A, B, C . . .) du treillis, et dont la cohérence est assurée dans leurs zones de coudage (18) dans lesquelles elles forment des zones aplaties de croisement des treillis, caractérisée par le fait que les lamelles en bande (13—17) s'étendant dans la direction de l'écoulement présentent, dans les zones de croisement (18), un système (20, 21, 38) de guidage de la circulation par l'intermédiaire duquel la direction de l'écoulement de la phase liquide (22), s'écoulant vers le bas sur une lamelle en bande (17), est modifiée de façon qu'une partie de ladite phase (23) soit déviée, par l'intermédiaire de la zone de croisement (18), vers la lamelle en bande voisine (16).

2. Garniture selon la revendication 1, caractérisée par le fait que, dans chaque zone de croisement (18), les bords externes des deux lamelles en bande (13—17) comportent une échancrure respective (20, 21).

3. Garniture selon la revendication 2, caractérisée par le fait que, dans la direction dans laquelle les lamelles en bande (13—17) s'étendent en zigzag, les échancrures (20, 21) sont plus longues que la largeur (s) d'une lamelle en bande, et sont plus profondes que la moitié de cette largeur (s) transversalement à ladite direction.

4. Garniture selon l'une des revendications 1 à 3, caractérisée par le fait que les lamelles en bande (13—17) comportent des trous (39; 43) et/ou des échancrures latérales (39′) entre les zones de croisement (18).

5. Garniture selon la revendication 4, caractérisée par le fait que les segments successifs en zigzag de chaque lamelle en bande (13—17) sont munis en alternance des perforations (43) et/ou des échancrures latérales.

6. Garniture selon l'une des revendications 1 à 5, caractérisée par le fait que tous les treillis à lamelles (a, b, c . . . ) sont directement empilés les uns sur les autres.

7. Garniture selon la revendication 6, caractérisée par le fait que les lamelles en bande des premier, troisième, cinquième treillis (a, c, e . . .) etc. et les lamelles en bande des deuxième, quatrième, sixième treillis (b, d, f . . .) etc. sont respectivement inclinées dans le ême sens et dans des sens opposés par rapport aux plans (A, B, C . . .) des treillis.

8. Garniture selon la revendication 6 ou 7, caractérisée par le fait que les treillis à lamelles (a, b, c . . .) sont empilés les uns sur les autres avec un décalage tel que les lamelles en bande de chaque treillis s'engagent dans les mailles des deux treillis voisins.

9. Garniture selon la revendication 8, caractérisée par le fait que les lamelles en bande de treillis voisins s'imbriquent les unes dans les autres sur des parties marginales échancrées (40).

10. Garniture selon la revendication 8 ou 9, caractérisée par le fait que les centres des zones de croisement des premier, troisième, cinquième treillis (a, c, e . . .) etc. se trouvent sur des lignes communes de coïncidence perpendiculaires aux plans (A, B, C . . .) des treillis, et les centres des zones de croisement des deuxième, quatrième, sixième treillis (b, d, f . . .) etc. sont situés sur des lignes communes de coïncidence qui sont perpendiculaires aux plans (A, B, C . . .) des treillis et passent par les centres des mailles des premier, troisième, cinquième treillis (a, c, e . . .) etc.

11. Garniture selon l'une des revendications 6 à 10, caractérisée par le fait que des treillis (36, 37) comprenant un nombre différent de lamelles en bande sont empilés les uns sur les autres, de telle façon que la section (34) de la garniture présente une forme adaptée progressivement à une section ronde (35) de la colonne, et que les deux lamelles en bande et en zigzag, situées le plus à l'extérieur dans chaque treillis, ne soient pas interrompues.

12. Garniture selon l'une des revendications 1 à 11, caractérisée par le fait que les lamelles en bande sont pourvues de protubérances ou renfoncements s'étendant transversalement à la direction longitudinale des bandes, et sont par exemple striées (46).

13. Garniture selon l'une des revendications 1 à 12, caractérisée par le fait que la largeur (s) des lamelles en bande (13—17) représente de vingt à trente fois l'épaisseur (t) de ces lamelles.

14. Procédé de fabrication de la garniture selon la revendication 1, dans lequel, pour confectionner les treillis à lamelles, des rubans (28) sont débités en des bandes parallèles (30) dont la cohésion est assurée en plusieurs zones (29), de façon que les tronçons (31) des lignes de coupe, entre lesquels les bandes (30) mutuellement adjacentes sont solidarisée, présentent la même longueur et soient décalés de la moitié de cette longueur par rapport aux tronçons voisins (31) des lignes de coupe, après quoi les bandes (30) sont dissociées par traction (33), caractérisé par le fait qu'un trou (32) est poinçonné ou percé au centre de chaque tronçon (31) d'une ligne de coupe dans les deux bandes (30) mutuellement adjacentes, trou qui est de préférence plus long et plus large que la largeur (s) d'une bande (30), après quoi seulement lesdites bandes (30) sont dissociées par traction.

*Fig. 1*

0 069 241

Fig. 2

Fig. 3

22

12

$\overline{V}$

$\overline{V}$

*Fig. 4*

22'

C

c c c c c

B

b b b b b

*Fig. 5*

A

a a a a a

Fig. 6

Fig. 11

Fig. 13

Fig. 12

Fig. 8

Fig. 7

Fig. 9

Fig. 10

Fig. 14

Fig. 15

42

43

45

**Fig. 16**

45

44

46

**Fig. 17**